# EUROPEAN PATENT APPLICATION

(11) **EP 2 942 271 A1**
(43) Date of publication of application: **11.11.2015**
(21) Application number: 15165177.5
(22) Date of filing: 27.04.2015
(51) Int. Cl.: B64C 7/02, B64D 29/02, B64D 29/06

(54) **NACELLE-TO-PYLON FAIRING**

(30) Priority: 06.05.2014 US 201414270485
(71) Applicant: The Boeing Company, Chicago, IL 60606-2016 (US)
(72) Inventor: Howe, Sean P, Chicago, IL 60606-2016 (US); Gromek, Christopher L, Chicago, IL 60606-2016 (US); Taylor, Anish A, Chicago, IL 60606-2016 (US)
(74) Representative: Boult Wade Tennant

(57) **Abstract**

A nacelle-to-pylon fairing (20) formed over at least a portion of an inter-region between a nacelle (16) and a pylon (18) of an aircraft may include a longitudinal axis, a lateral axis and a transverse axis, an upper end incorporated to the pylon at a fairing-to-pylon interface (72), and a lower end incorporated to the nacelle at a failing-to-nacelle interface (70), wherein the fairing (20) defines a surface between the upper end and the lower end.

## Description

### FIELD

The present disclosure is generally related to aircraft and, more particularly, to a nacelle-to-pylon fairing of an aircraft.

### BACKGROUND

An externally mounted aircraft engine is attached to an aircraft by a pylon. A nacelle encapsulates the engine. A pylon couples the nacelle and engine to a wing of the aircraft. The surfaces of the pylon and the nacelle typically intersect at a finite angle resulting in an aerodynamically noticeable corner.

When a fluid, such as ambient air, passes over the surfaces of the pylon and the nacelle, particularly the intersection of the pylon and the nacelle, the fluid's boundary layer may grow at a fast rate. When the boundary layer grows, the drag over the surfaces increases, which reduces fuel economy. Further, if the boundary layer is subject to a strong adverse pressure gradient, the flow may separate. Flow separation further reduces fuel economy and increases noise levels and structural fatigue. Therefore, nearly all under-wing-mounted aircraft engines may be susceptible to corner flow and a strong adverse pressure gradient due to the proximity of the nacelle-to-pylon intersection with a wing stagnation point.

Accordingly, those skilled in the art continue with research and development efforts in the field of aircraft aerodynamics.

### SUMMARY

In one embodiment, the disclosed nacelle-to-pylon fairing formed over at least a portion of an inter-region between a nacelle and a pylon of an aircraft may include a longitudinal axis, a lateral axis and a transverse axis, an upper end incorporated to the pylon at a fairing-to-pylon interface, and a lower end incorporated to the nacelle at a fairing-to-nacelle interface, wherein the fairing defines a surface between the upper end and the lower end.

In one embodiment, the disclosed fairing formed over at least a portion of an inter-region between a nacelle and a pylon of an aircraft may include a fairing-to-pylon interface that lies on a first reference plane parallel to a transverse axis, a fairing-to-nacelle interface that lies on a second reference plane parallel to a lateral axis, the first reference plane and the second reference plane include an intersection, a transverse dimension from the fairing-to-pylon interface to the intersection, a lateral dimension from the fairing-to-nacelle interface to the intersection, a normal dimension from the fairing to the intersection and a radius, the radius is defined by the transverse dimension, the lateral dimension and the normal dimension.

In yet another embodiment, also disclosed is a method for forming a surface between a nacelle and a pylon of an aircraft, the method may include the steps of: (1) providing a pylon including a first end and a second end opposed to the first end of the pylon in a longitudinal direction, (2) providing a nacelle coupled to the pylon, the nacelle including a first end and a second end opposed to the first end of the nacelle in the longitudinal direction and (3) incorporating a fairing over at least a portion of an inter-region between said pylon and said nacelle, the fairing including an upper end incorporated to the pylon at a fairing-to-pylon interface, and a lower end incorporated to the nacelle at a fairing-to-nacelle interface, wherein the fairing defines a surface between the upper end and the lower end, and wherein the surface includes a radius, the radius is defined by a transverse dimension, a lateral dimension and a normal dimension of the fairing.

Other embodiments of the disclosed nacelle-to-pylon fairing will become apparent from the following detailed description, the accompanying drawings and the appended claims.

### BRIEF DESCRIPTION OF THE DRAWINGS

Fig. 1 is a schematic perspective view of one embodiment of the disclosed aircraft;
Fig. 2 is a schematic front and side perspective view of one embodiment of the disclosed nacelle-to-pylon fairing;
Fig. 3 is a schematic side elevational view of one embodiment of the nacelle and pylon of the disclosed aircraft;
Fig. 4 is schematic top plan view of one embodiment of the disclosed nacelle-to-pylon fairing;
Fig. 5 is a schematic top plan view of one embodiment of the disclosed nacelle-to-pylon fairing
Fig. 6 is a schematic side perspective view of one embodiment of the disclosed nacelle, pylon and nacelle-to-pylon fairing;
Fig. 7 is a schematic front elevational view of one embodiment of the disclosed nacelle, pylon and nacelle-to-pylon fairing;
Fig. 8 is a partial schematic sectional view of the disclosed nacelle, pylon and nacelle-to-pylon fairing;
Fig. 9 is a partial schematic side perspective view of one embodiment of the disclosed nacelle, pylon and nacelle-to-pylon fairing;
Fig. 10 is a schematic side elevational view of one embodiment of the disclosed nacelle, pylon and nacelle-to-pylon fairing;
Fig. 11 is a schematic top plan view of the disclosed nacelle, pylon and nacelle-to-pylon fairing of Fig. 10;
Fig. 12 is a schematic top plan view of one embodiment of the disclosed nacelle, pylon and nacelle-to-pylon fairing;
Fig. 13 is a schematic top plan view of one embodiment of the disclosed nacelle, pylon and nacelle-to-pylon fairing;
Fig. 14 is a flow diagram of one embodiment of the disclosed method for forming a surface between a nacelle and a pylon of an aircraft.

### DETAILED DESCRIPTION

The following detailed description refers to the accompanying drawings, which illustrate specific embodiments of the disclosure. Other embodiments having different structures and operations do not depart from the scope of the present disclosure. Like reference numerals may refer to the same element or component in the different drawings.

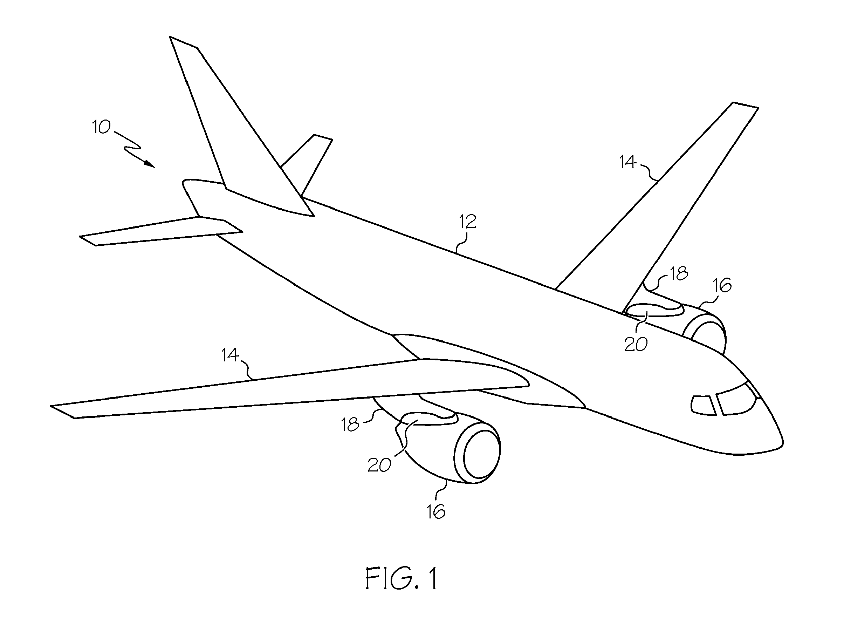

Fig. 1 illustrates one embodiment of an aircraft 10. The aircraft 10 may include a fuselage 12 and a pair of wings 14. Each wing 14 may extend outward from the fuselage 12. At least one nacelle 16 may be coupled to an underside of each wing 14. Each nacelle 16 may be coupled to the wing 14 by at least one pylon 18 capable of coupling the nacelle 16 to the wing 14. A nacelle-to-pylon fairing, generally referred to as a fairing, 20 may be incorporated between the nacelle 16 and the pylon 18.

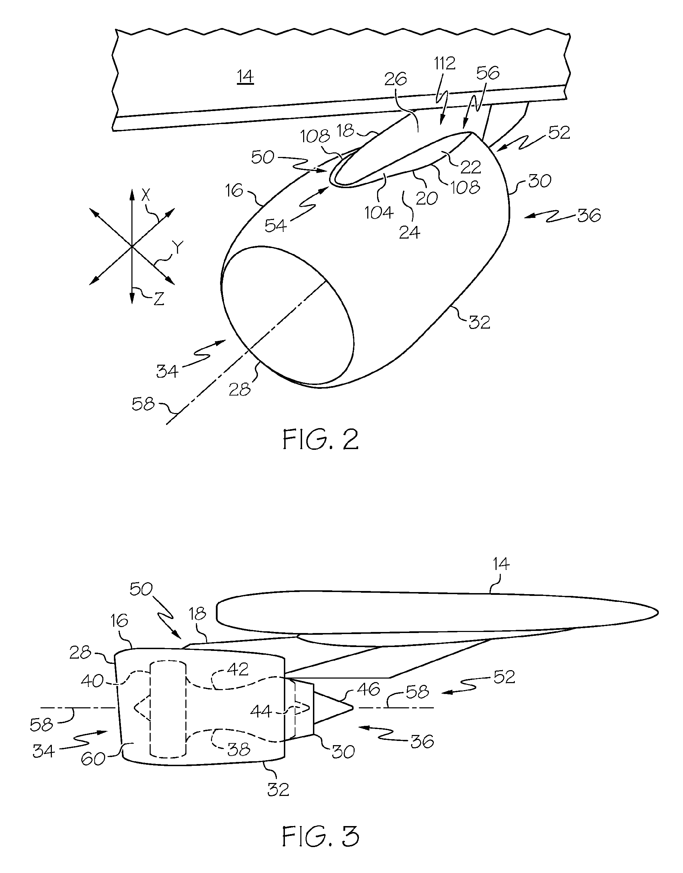

Referring to Fig. 2, throughout the following description, a reference coordinate axis system may be used to assist in the description of the nacelle 16, the pylon 18 and/or the fairing 20. The reference coordinate axis system may include a longitudinal axis **X,** a lateral axis Y and a transverse axis **Z.** As used herein, the longitudinal axis **X** may be generally parallel to a centerline 58 (e.g., the longitudinal axis) of the nacelle 16 that extends between a first end 34 and a second end 36 of the nacelle 16. The lateral axis **Y** may be normal to the longitudinal axis **X** and generally parallel to the wing 14 associated with the nacelle 16. The transverse axis **Z** may extend normal to both the longitudinal axis **X** and the lateral axis **Y.** Additionally, as used herein, the term longitudinal direction may refer to a direction substantially parallel to the longitudinal axis **X;** the term lateral direction may refer to a direction substantially parallel to the lateral axis **Y;** and the term transverse direction may refer to a direction substantially parallel to the transverse axis **Z.**

One embodiment of the nacelle 16 may include an inlet 28 proximate (e.g., at or near) the first (e.g., forward) end 34 of the nacelle 16 and an opposed (e.g., in the longitudinal direction) outlet 30 proximate the second (e.g., aft) end 36 of the nacelle 16. As used herein, the terms forward and aft may be considered relative to a direction of movement of the aircraft 10 (Fig. 1).

One or more nacelle cowlings 32 may be joined together (e.g., at cowling interfaces and/or junctions) to form the nacelle 16. For example, an exterior surface 24 of the nacelle 16 may be formed by one or more nacelle cowlings 32 extending from the first end 34 to the second end 36 of the nacelle 16 (e.g., in the longitudinal direction). During flight, air may flow through the inlet 28 of each nacelle 16 as well as over the exterior surface 24 of each nacelle 16.

One embodiment of the pylon 18 may include a first (e.g., forward) end 50 and an opposed (e.g., in the longitudinal direction) second (e.g., aft) end 52. The pylon 18 may couple the nacelle 16 to the wing 14. For example, the pylon 18 may be placed in a generally lower forward position of the wing 14 and above the nacelle 16. As an example, the pylon 18 may extend from an underside of the wing 14 to an upperside of the nacelle 16 (e.g., generally in the traverse direction). For example, the pylon 18 may extend from proximate the second end 36 of the nacelle 16 toward, but not to, the first end 34 of the nacelle 16 (e.g., in the longitudinal direction). The pylon 18 may be generally centered along the upperside of the nacelle 16. As used herein, the second end 52 of the pylon 18 may be a portion of the pylon 18 positioned proximate the second end 36 of the nacelle 16 (e.g., terminating at the second end 36 of the nacelle 16) and connected to the nacelle 16. Those skilled in the art will recognize that in certain aircraft constructions, a portion of the pylon 18 (e.g., the aft-most end of the pylon 18) may extend beyond the second end 36 of the nacelle 16 and/or may not be connected directly to the nacelle 16.

One or more pylon cowlings 48 may be joined together (e.g., at cowling interfaces and/or junctions) to form the pylon 18. For example, an exterior surface 26 of the pylon 18 may be formed by one or more pylon cowlings 48 extending from the first end 50 to the second end 52 of the pylon 18. During flight, air may flow over the exterior surface 26 of each pylon 18.

Referring to Fig. 3, in an example construction, each nacelle 16 may house an aircraft engine 38. The nacelle cowling 32 may form a channel 60 through which air flows through the nacelle 16 (e.g., through the engine 38). The channel 60 may extend along the centerline 58 of the nacelle 16 (e.g., in the longitudinal direction). The engine 38 may receive air through a fan 40 disposed proximate the inlet 28 of the nacelle 16. A combustion chamber 42 may combust the received air with fuel. An exhaust jet may exit through a rear-facing nozzle 44 (or cone) disposed proximate the outlet 30 of the nacelle 16 to propel the aircraft 10 (Fig. 1) in a forward direction.

For example, the engine 38 may be a high bypass ratio engine. The high bypass ratio engine may also receive a substantial amount of air through the inlet 28 of the nacelle 16 that is passed over (or bypasses) the engine 38 to provide additional thrust. The bypass air may be combined with the exhaust jet to improve fuel efficiency and engine noise.

The nacelle 16 may include an exhaust nozzle 46 at the outlet 30 proximate the nozzle 44 of the engine 38. For example, the exhaust nozzle 46 may be a variable area fan nozzle configured to vary an outlet area through which the exhaust jet and/or the exhaust jet and the bypass air passes. The exhaust nozzle 46 may be an integral part of the nacelle 16 (e.g., of the nacelle cowling 32) or a distinctly separate and translatable component (e.g., a sleeve).

Referring to Fig. 2, one embodiment of the fairing 20 may include a structure 104 defining an exterior surface 22 (e.g., an aerodynamic surface) between the exterior surface 24 of the nacelle 16 and the exterior surface 26 of the pylon 18 in the longitudinal direction, also referred to herein as an inter-region 112 between the nacelle 16 and the pylon 18. The fairing 20 may at least partially cover the inter-region 112. As one example, the fairing 20 may cover at least 25 percent of the longitudinal distance of the inter-region 112. As one example, the fairing 20 may cover at least 50 percent of the longitudinal distance of the inter-region 112. As one example, the fairing 20 may cover at least 75 percent of the longitudinal distance of the inter-region 112. As one example, the fairing 20 may cover at least 90 percent of the longitudinal distance of the inter-region 112. As one example, the fairing 20 may cover 100 percent of the inter-region 112.

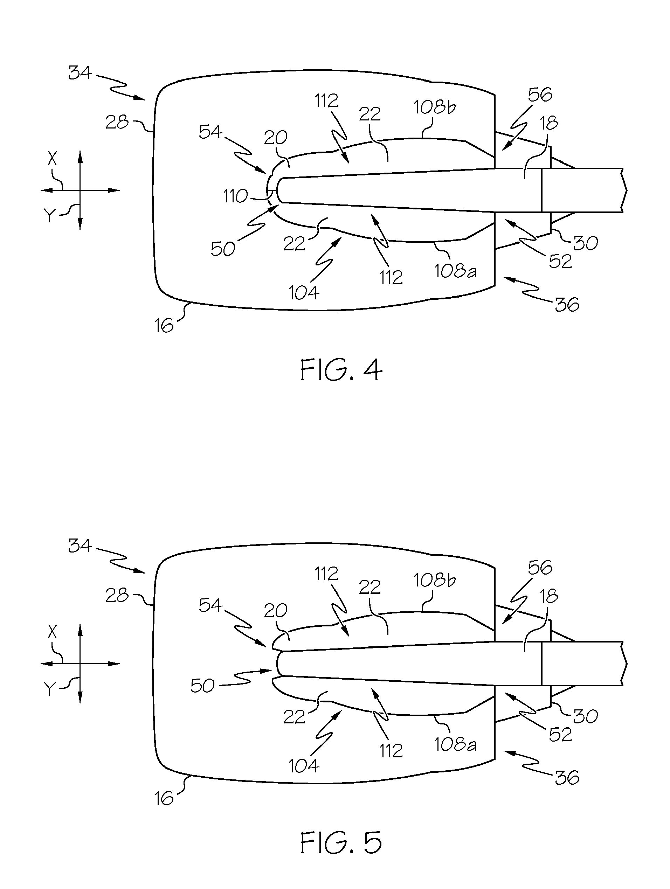

Referring to Figs. 2, 4 and 5, in one example construction, the structure 104 may include a pair of legs 108 (identified individually as 108a and 108b in Figs. 4 and 5), each leg 108 may extend in the longitudinal direction and at least partially covering the inter-region 112 between the nacelle 16 and the pylon 18 to define the exterior surface 22. The fairing 20 (e.g., the structure 104) may be fabricated from any suitable material. For example, the fairing 20 may be formed from aluminum, composites and the like. The fairing 20 may include a single formed piece (e.g., a unitary member) or may include a plurality of sections formed to define the fairing 20.

The fairing 20 may include a first (e.g., forward) end 54 and an opposed (e.g., in the longitudinal direction) second (e.g., aft) end 56. The fairing 20 may extend from proximate the second end 36 of the nacelle 16 to proximate the first end 50 of the pylon 18. As one example, the second end 56 of the fairing 20 may be positioned proximate the second end 36 of the nacelle 16 and the first end 54 of the fairing 20 may be positioned proximate the first end 50 of the pylon 18. As one example, the fairing 20 may extend (e.g., wrap) around at least a portion of the first end 50 of the pylon 18. For example, the first end 54 of the fairing 20, between the legs 108, may cover at least a leading edge of the pylon 18 (e.g., a forward edge in the lateral direction defined by the inter-region 112 between the pylon 18 and the nacelle 16).

During flight, air may flow over the exterior surface 22 of each fairing 20. Thus, the fairing 20 may define a chamfer or a fillet between the pylon 18 and the nacelle 16 that may significantly reduce or substantially eliminate a corner feature perceived by an aerodynamic boundary layer, for example, the corner defined at an interface between or intersection of the exterior surface 24 of the nacelle 16 and the exterior surface 26 of the pylon 18.

Referring to Fig. 4, in one example, the legs 108a, 108b may be connected at the first end 54 of the fairing 20 to form a generally V-shaped or U-shaped structure 104. As one example, the structure 104 of the fairing 20 may be symmetrical in the longitudinal direction. The legs 108 may cover at least a portion of the longitudinal distance of the inter-region 112 between the pylon 18 and the nacelle 16. In one example construction, the legs 108 may be integrally formed such that the structure 104 defines a unitary construction (e.g., a single piece of composite or aluminum material). In one example construction, the legs 108 may be connected together, such as, at a connection interface 110 located about the first end 54 of the fairing 20. For example, the legs 108 may be connected at the first end 50 of the pylon 18 such that the structure 104 defines a unitary construction.

In such an example, the structure 104 may encompass the first end 50 (e.g., the leading edge) of the pylon 18 and the legs 108a, 108b may extend toward the second end 52 of the pylon 18 and/or the second end 36 of the nacelle 16. As one example, the legs 108a, 108b may extend such that the second end 56 of the fairing 20 terminates at the second end 52 of the pylon 18 and/or the second end 36 of the nacelle 16, as illustrated in Fig. 4. As one example, the legs 108a, 108b may extend such that the second end 56 of the fairing 20 terminates at a positioned spaced away from the second end 52 of the pylon 18 and/or the second end 36 of the nacelle 16 (not shown).

Referring to Fig. 5, in one example, the legs 108a, 108b may be separate elements such that the structure 104 is bifurcated by the pylon 18. As one example, the legs 108a, 108b may be mirror images of one another. The legs 108a, 108b may cover at least a portion of the inter-region 112 between the pylon 18 and the nacelle 16. As one example, the first end 54 of the fairing 20 may be positioned proximate (e.g., at or near) the first end 50 of the pylon 18, as illustrated in Fig. 5). As one example, the first end 54 of the fairing 20 may be spaced away from the first end 50 of the pylon 18 (e.g., in the longitudinal direction) toward the second end 52 of the pylon 18 (not shown). As one example, the legs 108a, 108b may extend such that the second end 56 of the fairing 20 terminates at the second end 52 of the pylon 18 and/or the second end 36 of the nacelle 16, as illustrated in Fig. 5. As one example, the legs 108a, 108b may extend such that the second end 56 of the fairing 20 terminates at a positioned spaced away from the second end 52 of the pylon 18 and/or the second end 36 of the nacelle 16 (not shown).

As one example, in constructions where the legs 108a, 108b are connected to form the unitary construction (e.g., Fig. 4) and/or where the legs 108a, 108b are not connected (e.g., Fig. 5), the legs 108a, 108b may be substantially the same length. As one example, in constructions where the legs 108a, 108b are connected to form the unitary construction and/or where the legs 108a, 108b are not connected, the legs 108a, 108b may be different in length. As one example, in constructions where the legs 108a, 108b are not connected, the legs 108a, 108b may be aligned (e.g., in the longitudinal direction) on both sides of the nacelle 16 and the pylon 18. As one example, in constructions where the legs 108a, 108b are not connected, the legs 108a, 108b may be staggered (e.g., in the longitudinal direction) relative to each side of the nacelle 16 and the pylon 18.

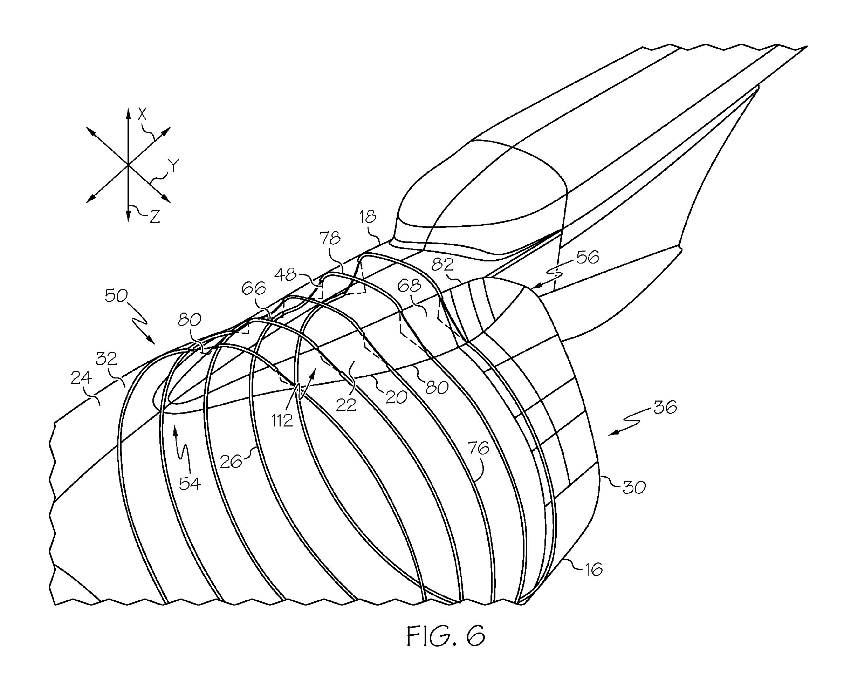

Referring to Fig. 6, the nacelle 16 may include an underlying nacelle support structure 76. The pylon 18 may include an underlying pylon support structure 78. The nacelle support structure 76 and the pylon support structure 78 may include a plurality of structural members defining the underlying shape of the nacelle 16 and the pylon 18, respectively. For example, the nacelle support structure 76 and the pylon support structure 78 may include a plurality of interconnected struts, stringers and the like. The nacelle cowling 32, the fairing 20 and the pylon cowling 48 may be coupled (e.g., permanently affixed) to the nacelle support structure 76 and the pylon support structure 78 to form the exterior surface 24 of the nacelle 16, the exterior surface 26 of the pylon 18 and the exterior surface 22 of the fairing 20.

The nacelle support structure 76 and nacelle cowling 32 may define a substantially annular-shaped (e.g., circular in cross section) nacelle 16. For example, the nacelle cowling 32 may define a generally circular exterior surface 24 of the nacelle 16. The nacelle cowling 32 may include a single formed piece (e.g., a unitary member) or may include a plurality of cowling sections formed to define the nacelle 16.

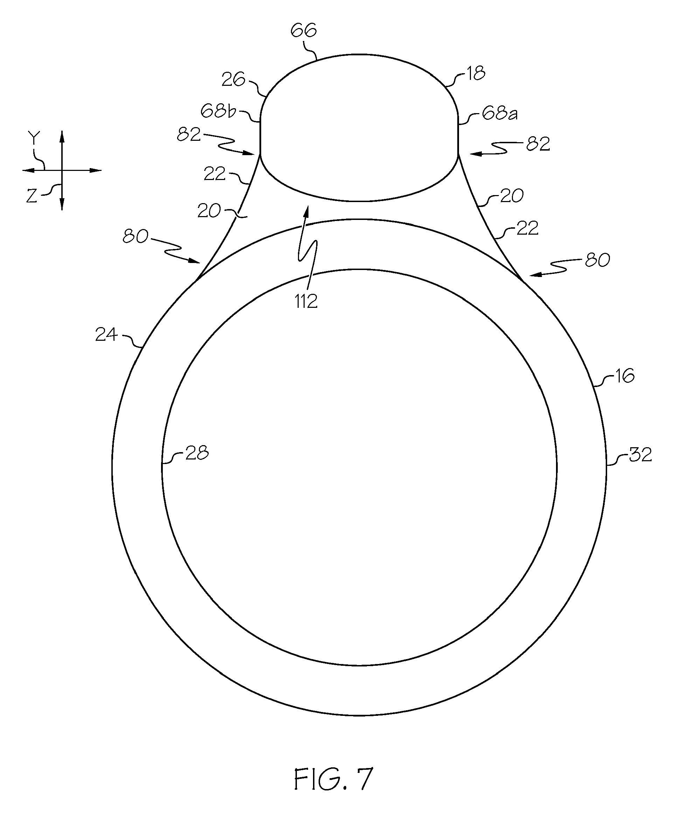

The pylon support structure 78 and pylon cowling 48 may define a top 66 of the pylon 18 and two opposed sides 68 (e.g., sides 68a, 68b (Fig. 7) extending in the traverse direction and opposed in the lateral direction) of the pylon 18. For example, the pylon cowling 48 may define the exterior surface 26 of the pylon 18. The pylon cowling 48 may include a single formed piece (e.g., a unitary member) or may include a plurality of cowling sections formed to define the top 66 and the sides 68a, 68b.

Referring to Fig. 7, in one embodiment, the fairing 20 may extend (e.g., in the transverse direction and the lateral direction) between the nacelle cowling 32 and the pylon cowling 48 (e.g., covering the inter-region 112). The fairing 20 may include a lower end 80 connected to the nacelle 16 and an opposed (e.g., in the transverse direction) upper end 82 connected to the pylon 18. For example, the exterior surface 22 of the fairing 20 may define at least a portion of a linear distance around the exterior surface 24 (e.g., the circumference) of the nacelle 16 and at least a portion of the exterior surface 26 of the pylon cowling 48 (e.g., the sides 68a, 68b).

As one example, the lower ends 80 of the fairing 20 may span between approximately 5° and 90° of the circumference of the nacelle 16 and the nacelle cowling 32 may span the remaining portion of the circumference of the nacelle 16. As one example, the lower ends 80 of the fairing 20 may span between approximately 10° and 60° of the circumference of the nacelle 16 and the nacelle cowling 32 may span the remaining portion of the circumference of the nacelle 16. As one example, the lower ends 80 of the fairing 20 may span approximately 45° of the circumference of the nacelle 16 and the nacelle cowling 32 may span the remaining portion of the circumference of the nacelle 16.

As one example, the upper ends 82 of the fairing 20 may span between approximately 25 percent and 100 percent of the sides 68a, 68b of the pylon 18. As one example, the upper ends 82 of the fairing 20 may span between approximately 50 percent and 90 percent of the sides 68a, 68b of the pylon 18. As one example, the upper ends 82 of the fairing 20 may span approximately 75 percent of the sides 68a, 68b of the pylon 18.

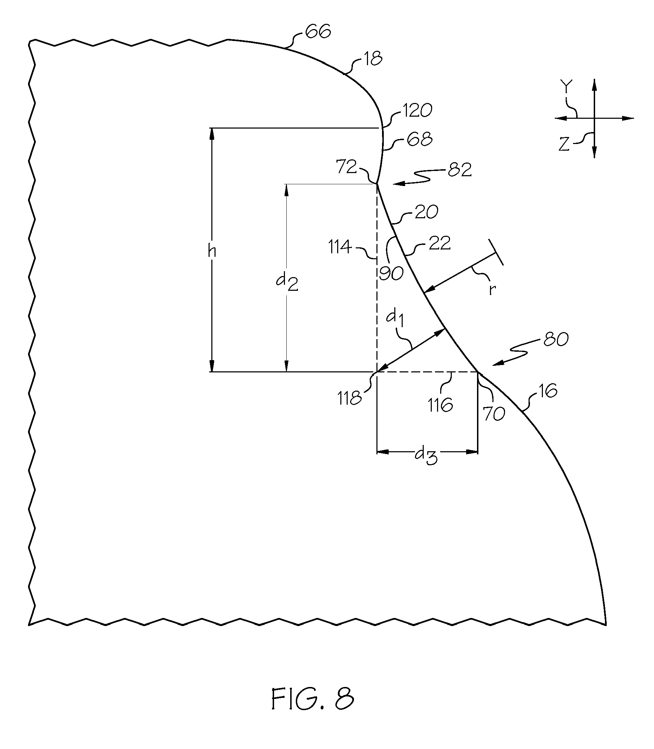

Referring to Fig. 8, the fairing 20 may include a first (e.g., normal) dimension **d₁**, a second (e.g., transverse) dimension **d₂** and a third (e.g., lateral) dimension **d₃**. The dimensions **d₁**, **d₂** and **d₃** may be measured with respect to a first (e.g., pylon) reference plane 114 and a second (e.g., nacelle) reference plane 116. The first reference plane 114 may be parallel to the transverse axis **Z.** The second reference plane 116 may be parallel to the lateral axis **Y.**

An intersection of the fairing 20 and the pylon 18, referred to herein as a fairing-to-pylon interface 72, may lie on the first plane 114. As one example, the fairing-to-pylon interface 72 may be a point through which a profile curvature of the fairing 20 (e.g., at the upper end 82) transitions from a curvature of one sign (e.g., a positive curvature or a negative curvature) to zero. As one example, the fairing-to-pylon interface 72 may be a point through which the profile curvature of the fairing 20 (e.g., at the upper end 82) goes through a discontinuity of slope.

An intersection of the fairing 20 and the nacelle 16, referred to herein as a fairing-to-nacelle interface 70, may lie on the second plane 116. As one example, the fairing-to-nacelle interface 70 may be a point through which the profile curvature of the fairing 20 (e.g., at the lower end 80) transitions from a curvature of one sign (e.g., a positive curvature or a negative curvature) to zero. As one example, the fairing-to-nacelle interface 70 may be a point through which the profile curvature of the fairing 20 (e.g., at the lower end 80) goes through a discontinuity of slope.

The first dimension **d₁** may measure a minimum linear distance from the fairing 20 to the intersection 118. As one example, first dimension **d₁** may be defined by the linear distance of a line segment normal to the fairing 20 and extending to the intersection 118. The second dimension **d₂** may measure the linear distance in the transverse direction (e.g., parallel to the transverse axis **Z)** from the fairing-to-pylon interface 72 to an intersection of the first plane 114 and the second plane 116, referred to herein as intersection 118. The third dimension **d₃** may measure the linear distance in the lateral direction (e.g., parallel to the lateral axis **Y)** from the fairing-to-nacelle interface 70 to the intersection 118. The first dimension **d₁** may measure the linear distance, normal to the fairing 20, from the fairing 20 to the intersection 118.

In one example, the second dimension **d₂** and the third dimension **d₃** may be substantially the same. In one example, the second dimension **d₂** and the third dimension **d₃** may be different. Where the second dimension **d₂** and the third dimension **d₃** are different, the difference may not exceed between approximately 250 percent and 300 percent.

The pylon 18 may include a height **h.** The height **h** may measure the linear distance in the transverse direction (e.g., parallel to the transverse axis **Z)** from a corner 120 of the pylon 18 to the intersection 118. As one example, the corner 120 may be defined by the interface between the side 68 of the pylon 18 and the top 66 of the pylon 18. As one example, the corner 120 may be defined by a point on the profile curvature of the pylon 18 where a straight line crossing that point is bi-tangential to both the pylon 18 and the nacelle 16.

In one example, the second dimension **d₂** may be at least 10 percent the height **h.** In one example, the second dimension **d₂** may be at least 25 percent the height **h.** In one example, the second dimension **d₂** may be at least 50 percent the height **h.** In one example, the second dimension **d₂** may be at least 75 percent the height **h.** In one example, the second dimension **d₂** may be 100 percent the height **h.**

The fairing 20 may have a curved cross-sectional profile (e.g., shape) having at least one radius **r.** The curvature of the radius **r** may be defined with respect to an axis parallel to the longitudinal axis **X** (e.g., Fig. 6). As one example, the cross-sectional profile of the fairing 20 may have a single, constant radius **r.** As one example, the cross-sectional profile of the fairing 20 may have a plurality of variable radii **r** (e.g., a non-constant radius r). For example, the radius **r** at any given point along the cross-sectional profile of the fairing 20 may increase or decrease (e.g., from the upper end 82 to the lower end 80), however, the radius **r** may be non-inflecting (e.g., does not change sign from a positive curvature to a negative curvature). As one general, non-limiting example, the radius **r** at points on the cross-sectional profile of the fairing 20 proximate (e.g., at or near) the lower end 80 and the upper end 82 may be a minimum radius **r** and the radius **r** at points on the cross-sectional profile of the fairing 20 proximate a mid-point may be a maximum radius **r.** As one example, the radius **r** may range from a relatively small radius **r** (e.g., between 5 inches and 25 inches) to a relatively large radius **r** (e.g., greater than 25 inches). As one example, the radius **r** may approach infinity (e.g., defining a substantially flat surface 22).

In one example construction, the curvature of the fairing 20 (e.g., the radius **r** of the cross-sectional profile of the fairing 20) may be configured such that at least the lower end 80 of the fairing 20 is tangent to the exterior surface 24 of the nacelle 16 (e.g., the nacelle cowling 32) at the fairing-to-nacelle interface 70 and the upper end 82 of the fairing 20 is tangent to the exterior surface 26 of the pylon 18 (e.g., the pylon fairing 48) at the fairing-to-pylon interface 72. In one example construction, the lower end 80 of the fairing 20 is non-tangent to the exterior surface 24 of the nacelle 16 (e.g., the nacelle cowling 32) at the fairing-to-nacelle interface 70 and/or the upper end 82 of the fairing 20 is non-tangent to the exterior surface 26 of the pylon 18 (e.g., the pylon fairing 48) at the fairing-to-pylon interface 72.

The radius **r** of the fairing 20 (e.g., the radius r of the fairing 20 at any point along the curved cross-sectional profile of the fairing 20) may depend upon the first dimension **d₁**, the second dimension **d₂** and/or the third dimension **d₃**. Thus, as any one of the first dimension **d₁**, the second dimension **d₂** and/or the third dimension **d₃** changes, the radius **r** will change accordingly. The first dimension **d₁**, the second dimension **d₂** and/or the third dimension **d₃** may depend on and/or vary relative to the size and/or dimensions (e.g., height **h)** of the pylon 18 and/or the size and/or dimensions (e.g., circumference or diameter) of the nacelle.

As one example, as first dimension **d₁** increases, the radius **r** may increase. An increase in radius **r** (e.g., in response to an increase in at least the first dimension **d₁**) may reduce any appreciable corners or edges between the pylon 18 and the nacelle 16, between the fairing 20 and the pylon 18, and/or between the fairing 20 and the nacelle 16.

The particular radius **r** of the fairing 20 or the particular plurality of radii **r** of the fairing 20 (e.g., at any point on the cross-sectional profile of the fairing 20) may also depend on external factors. As one example, the particular radius **r** of the fairing 20 or the particular plurality of radii **r** of the fairing 20 may depend on the desired aerodynamic characteristics of the fairing 20 (e.g., the exterior surface 22). Those skilled in the art will recognize that maximizing the radius **r** may minimize the surface area of the exterior surface 22, thus, optimizing the aerodynamic benefits of the fairing 20. As one example, the particular radius r of the fairing 20 or the particular plurality of radii r of the fairing 20 may depend on the configuration of the nacelle 16. For example, the curved cross-sectional profile of the fairing 20 may be such that the fairing 20 does not interfere with the movement of the nacelle 16, as will be described herein below.

In one example construction, the fairing 20 may include an interior surface 90 opposite the exterior surface 22. As one example, both the interior surface 90 and the exterior surface 22 may define a curved surface (e.g., a concave surface) having the same radius **r.** As one example, the radius **r** of the interior surface 90 and the radius **r** of the exterior surface 22 may be different, for example, the interior surface 90 may be curved (e.g., having an interior radius) and the exterior surface 22 (e.g., between proximate the lower end 80 and proximate the upper end 82) may be curved (e.g., having an exterior radius different than the interior radius) or may be substantially planar (e.g., having an exterior radius approaching infinity).

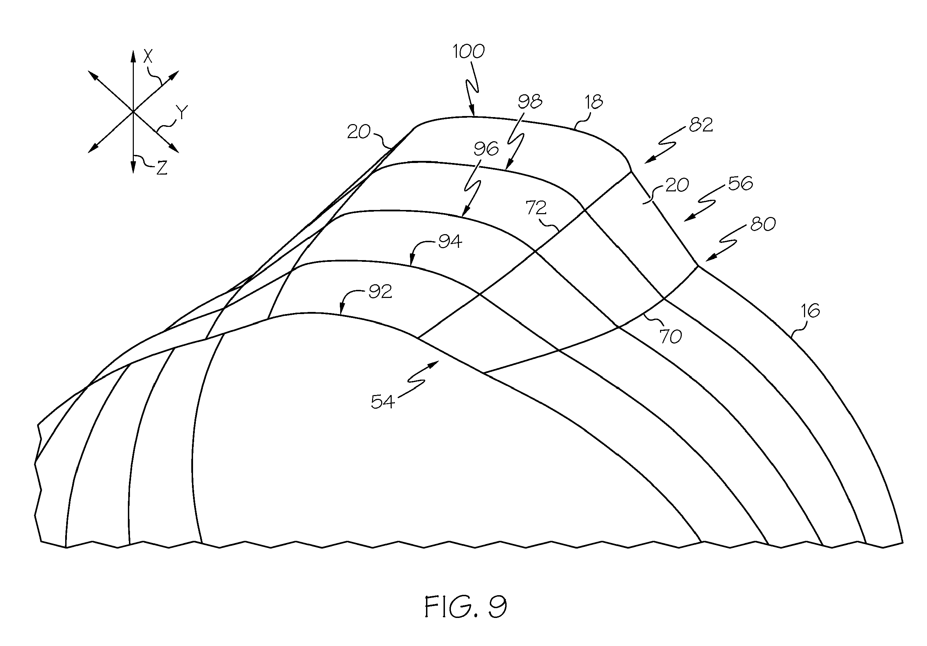

Referring to Fig. 9, in one example construction, the height **h** (Fig. 8) of the pylon 18 in the transverse direction may vary (e.g., increase) as the pylon 18 extends in the longitudinal direction from the first end 50 to the second end 52. Accordingly, at least one of the radius r, the first dimension **d₁**, the second dimension **d₂** and/or the third dimension **d₃** of the fairing 20 may similarly change in response to a change in height **h** of the pylon 18. Thus, at least one of the radius **r,** the first dimension **d₁**, the second dimension **d₂** and/or the third dimension **d₃** of the fairing 20 may vary depending upon a given location on the fairing 20 in the longitudinal direction relative to the nacelle 16 and the pylon 18.

For example, the fairing 20 may include a particular radius **r,** a particular first dimension **d₁**, a particular second dimension **d₂** and/or a particular third dimension **d₃** at any given location in the longitudinal direction. As one example, the fairing 20 may include a plurality of radii r, a plurality of first dimensions **d₁**, a plurality of second dimensions **d₂** and/or a plurality of third dimensions **d₃** at in the longitudinal direction. In one example construction, at least one radius r of the plurality of radii **r,** at least one first dimension **d₁** of the plurality of first dimensions **d₁**, at least one second dimension **d₂** of the plurality of second dimensions **d₂,** and/or at least one third dimension **d₃** of the plurality of third dimensions **d₃** may be different from at least one other radius **r** of the plurality of radii **r,** at least one other first dimension **d₁** of the plurality of first dimensions **d₁**, at least one other second dimension **d₂** of the plurality of second dimensions **d₂,** and/or at least one other third dimension **d₃** of the plurality of third dimensions **d₃**.

For example, the fairing 20 may include a plurality of locations in the longitudinal direction (identified individually as a first location 92, a second location 94, a third location 96, a fourth location 98 and a fifth location 100. The first location 92 may illustrate a location on the fairing 20 proximate the first end 50 (Fig. 4) of the pylon 18 or the fairing 20 covering the first end 50 of the pylon 18 (e.g., at the leading edge of the pylon 18). The second location 94 may illustrate a location on the fairing 20 between the first end 50 and the second end 52 of the pylon 18 and spaced away (e.g., in the longitudinal direction) from the first location 92 toward the second end 52 of the pylon 18. The third location 96 may illustrate a location on the fairing 20 between the first end 50 and the second end 52 of the pylon 18 and spaced away (e.g., in the longitudinal direction) from the second location 94 toward the second end 52 of the pylon 18. The fourth location 98 may illustrate a location on the fairing 20 between the first end 50 and the second end 52 of the pylon 18 and spaced away (e.g., in the longitudinal direction) from the third location 96 toward the second end 52 of the pylon 18. The fifth location 100 may illustrate a location on the fairing 20 between the first end 50 and the second end 52 of the pylon 18 and spaced away (e.g., in the longitudinal direction) from the fourth location 98 toward the second end 52 of the pylon 18 (e.g., proximate the second end 52 of the pylon 18). At least one of the radius **r,** the first dimension **d₁**, the second dimension **d₂** and/or the third dimension **d₃** of the fairing 20 may change (e.g., increase or decrease) at or near at least one of the plurality of locations 92, 94, 96, 98, 100.

As one example, where the second end 56 (Fig. 4) of fairing 20 terminates at a position spaced away from the second end 52 of the pylon 18 and/or the second end 36 of the nacelle 16, the first dimension **d₁** (Fig. 8) may be no more than 25 percent of the second dimension **d₂.** Accordingly, the radius **r** of the fairing 20 may increase approaching the second end 56 of the fairing 20 and/or the second dimension **d₂** may decrease to minimize the step down between the close out of the fairing 20 (e.g., the second end 56) and the exterior surfaces 24, 26 of the nacelle 16 and the pylon 18, respectively.

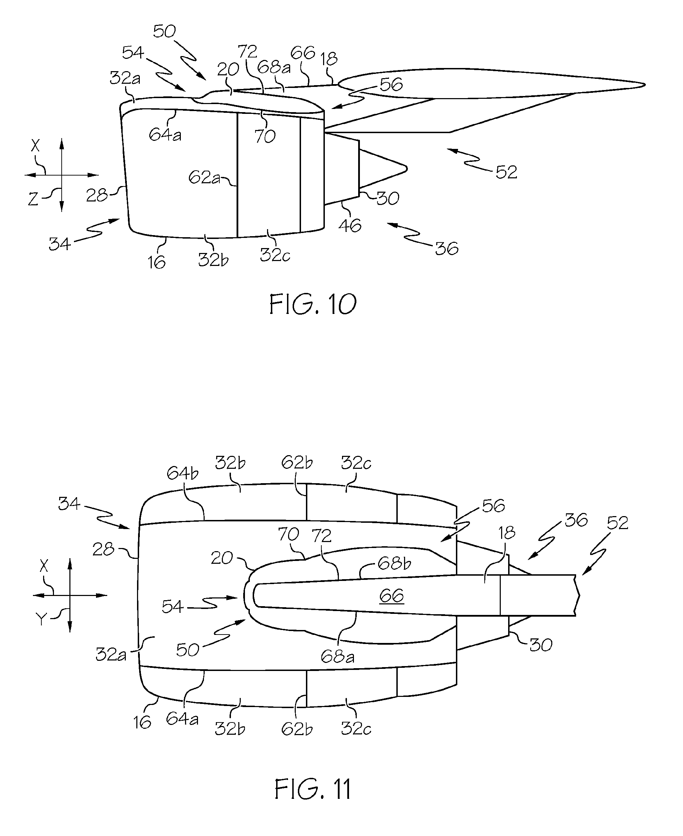

Referring to Figs. 10 and 11, one embodiment of the nacelle 16 may include a plurality of nacelle cowlings 32. For example, the nacelle 16 may include a first (e.g., top) cowling 32a, a second (e.g., inlet) cowling 32b and a third (e.g., outlet) cowling 32c. The first cowling 32a, the second cowling 32b and the third cowling 32c may define the exterior surface 24 of the nacelle 16. The second cowling 32b may define the inlet 28 proximate the first end 34 of the nacelle 16. The third cowling 32c may define the outlet 30 proximate the second end 36 of the nacelle 16. Together, the first cowling 32a, the second cowling 32b and the third cowling 32c may form the channel 60 (Fig. 3) through which air flows through the nacelle 16 (e.g., through the engine 38).

In one example construction, the first cowling 32a may define an arcuate portion (e.g., a portion of the circumference) of the exterior surface 24 of the nacelle 16. The second cowling 32b may define a C-shaped portion joined with the first cowling 32a. The third cowling 32c may define a C-shaped portion joined with the first cowling 32a adjacent to the second cowling 32b. For example, the first cowling 32a may span between approximately 10° and 180° of the circumference of the nacelle 16 and the second cowling 32b and third cowling 32c may span the remaining portion of the circumference of the nacelle 16 to form the channel 60 (Fig. 3).

The fairing 20 may extend from the first cowling 32a to the pylon cowling 48 (e.g., in the transverse direction). As an example construction, the fairing 20 may be structurally integrated (e.g., a co-cured composite) with the first cowling 32a and joined (e.g., fastened) to the pylon cowling 48 (e.g., at the fairing-to-nacelle interface 70). As another example construction, the fairing 20 may be structurally integrated (e.g., a co-cured composite) with the pylon cowling 48 (e.g., a portion of the pylon cowling 48 defining the sides 68a, 68b) and joined to the first cowling 32a (e.g., at the fairing-to-pylon interface 72). As another example construction, the fairing 20 may be joined to the first cowling 32a (e.g., at the fairing-to-nacelle interface 70) and the pylon cowling 48 (e.g., at the fairing-to-pylon interface 72). As yet another example, the first cowling 32a, the fairing 20 and the pylon cowling 48 may be integrally formed from a single homogeneous piece of material (e.g., a co-cured composite).

In one example construction, a pair of transverse cowling interfaces (e.g., junctions) 62a, 62b may be disposed (e.g., in the transverse direction) between the second cowling 32b and the third cowling 32c. A pair of longitudinal cowling interfaces 64a, 64b may be disposed (e.g., in the longitudinal direction) between the first cowling 32a and the second cowling 32b and third cowling 32c.

The second cowling 32b and the third cowling 32c may move relative to the first cowling 32a (and the pylon 18). In an example construction, the second cowling 32b and the third cowling 32c may linearly translate (e.g., in the longitudinal direction) relative to the first cowling 32a. Such longitudinal translation of the second cowling 32b and/or the third cowling 32c may act to expand the transverse cowling interfaces 62a, 62b disposed between the second cowling 32b and the third cowling 32c to expose one or more underlying structures. In such a construction, the first cowling 32a include one or more engaging structures (e.g., a track) for guiding the longitudinal translation of the second cowling 32b and/or the third cowling 32c relative to the first cowling 32a.

As one example, the second cowling 32b may translate away (e.g., in the longitudinal direction) from the third cowling 32c to allow access to the interior of the nacelle 16 (e.g., to components of the engine 38). As one example, the third cowling 32c may translate away (e.g., in the longitudinal direction) from the second cowling 32b to expose a plurality of airflow directing vanes (not shown) that place the nacelle 16 and engine 38 (Fig. 3) in a reverse thrust configuration. For example, the vanes may redirect a flow of air from within the nacelle 16 through a lattice (not shown) to produce a reverse thrust.

Those skilled in the art will recognize that alternate constructions of the nacelle 16 that produce a reverse thrust are also anticipated. For example, one or more movable components (e.g., flaps, blockers and the like) may be integrated and/or connected to the nacelle 16 to expose the plurality of vanes in the reverse thrust configuration.

As one example, the second cowling 32b and/or the third cowling 32c may rotate relative to the first cowling 32a. In such a construction, the second cowling 32b and/or the third cowling 32c may include complimentary halves separated by a cowling interface (e.g., a split), for example extending along an underside of the nacelle 16 (e.g., in the longitudinal direction). Such rotation may be about a hinge center coaxial with the engaging structure (not shown) of the first cowling 32a (e.g., about the longitudinal cowling interface 64a, 64b).

As yet another example, at least one of the second cowling 32b and/or the third cowling 32c may linearly translate relative to the first cowling 32a and/or at least one of the second cowling 32b and/or the third cowling 32c may rotate relative to the first cowling 32a.

The fairing 20 may be configured to not interfere with movement of the second cowling 32b and/or the third cowling 32c relative to the first cowling 32a. For example and as illustrated in Fig. 10, the fairing 20 may extend only a portion of the first cowling 32a (e.g., defining a portion of the circumference of the nacelle 16) and terminate prior the longitudinal cowling interface 64a, 64b. As another example (not shown), an outer edge of the fairing 20 may extend to and define at least a portion of the longitudinal cowling interface 64a, 64b (e.g., defining a larger portion of the circumference of the nacelle 16).

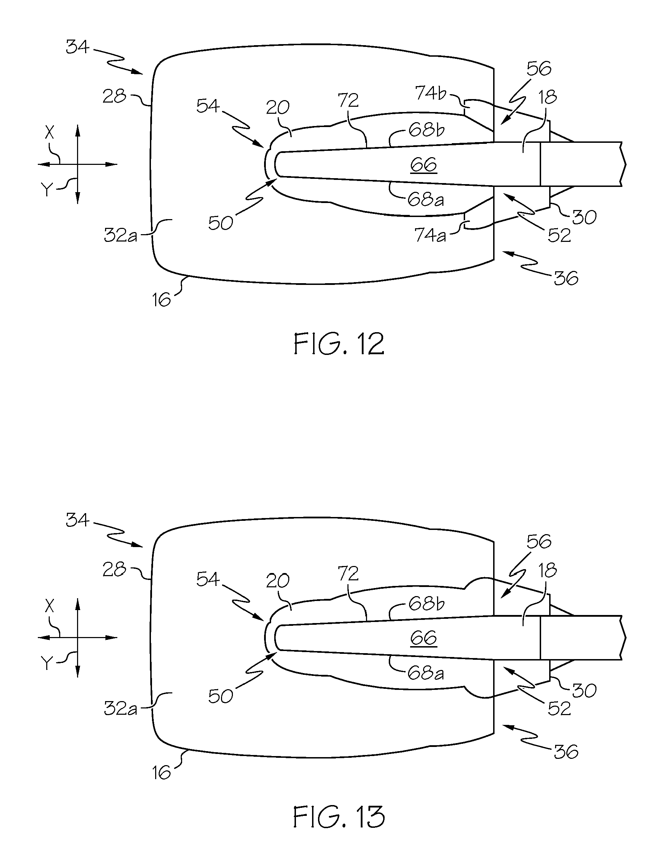

Referring to Fig. 12, in another embodiment, the nacelle 16 may include one or more thrust reverse fairings 74a, 74b. The thrust reverse fairings 74a, 74b may be configured, constructed and/or positioned to cover an underlying rail or track (not shown) used to deploy one or more thrust reversers (not shown) of the nacelle 16. In an example construction, the thrust reverse fairings 74a, 74b may be disposed proximate the second end 36 of the nacelle 16, for example, extending (e.g., in the longitudinal direction) from the second (e.g., aft) end 36 of the nacelle 16 partially toward the first (e.g., forward) end 34 of the nacelle 16. However, other positions of the thrust reverse fairings 74a, 74b are contemplated depending on the location of the thrust reversers.

As one example, the thrust reverse fairings 74a, 74b may be positioned between the nacelle 16 (e.g., the first cowling 32a) and the fairing 20. For example, the thrust reverse fairings 74a, 74b may extend from the fairing 20 and define a portion of the exterior surface 24 (e.g., a portion of the circumference) of the nacelle 16. For example, the thrust reverse fairing 74a, 74b may extend from the fairing-to-nacelle cowling interface 70 toward the longitudinal cowling interface 64a, 64b (e.g., defining a portion of the first cowling 32a).

Referring again to Fig. 13, in another embodiment, the fairing 20 may act as (e.g., function as) and/or replace the thrust reverse fairings 74a, 74b (Fig. 6). In such as an example embodiment, at least a portion of the fairing 20 may be configured, constructed and/or positioned to cover the underlying rail or track (not shown) used to deploy the one or more thrust reversers (not shown) of the nacelle 16. In an example construction, the fairing 20 may extend (e.g., in the longitudinal direction) from the second (e.g., aft) end 36 of the nacelle 16 toward the first (e.g., forward) end 34 of the nacelle 16. The second (e.g., aft) end 56 of the fairing 20 may also define a portion (e.g., a portion of the circumference) of the exterior surface 24 of the nacelle 16 originally formed by the thrust reverse fairings 74a, 74b (Fig. 7). For example, at least a portion of the fairing-to-nacelle cowling interface 70 (e.g., proximate the second end 56 of the fairing 20) may extend toward or be positioned proximate the longitudinal cowling interface 64a, 64b (e.g., defining a portion of the first cowling 32a).

Referring to Figs. 1 and 2, in one embodiment, the fairing 20 may be installed between the nacelle 16 and the pylon 18 of an in-service aircraft 10 (Fig. 1). On an in-service aircraft 10, the nacelle 16 (e.g., the nacelle cowling 32) may be integrated or joined with the pylon 18 (e.g., the pylon cowling 48), for example, at a cowling interface (e.g., the inter-region 112) forming a corner between the nacelle 16 and the pylon 18. The fairing 20 may be a distinctly separate component coupled between the exterior surface 24 of the nacelle 16 (e.g., the nacelle cowling 32) and the exterior surface 26 of the pylon 18 (e.g., the pylon cowling 48) to cover the corner formed between the nacelle 16 and the pylon 18.

The fairing 20 may be coupled to the exterior surface 24 of the nacelle 16 (e.g., the nacelle cowling 32) and/or the exterior surface 26 of the pylon 18 (e.g., the pylon cowling 48) by any suitable process or operation. For example, at least a portion of the interior surface 90 of the fairing 20 may be bonded to the nacelle 16 and the pylon 18. For example, at least a portion of the interior surface 90 of the fairing 20 proximate the lower end 80 may be adhesively bonded to the nacelle cowling 32 and at least a portion of the interior surface 90 of the fairing 20 proximate the upper end 82 may be adhesively bonded to the pylon cowling 48.

As another example, the fairing 20 may be mechanically joined to the nacelle 16 and the pylon 18. For example, at least a portion of the fairing 20 may be fastened to the nacelle support structure 76 (Fig. 4) (e.g., about the lower end 80) and at least a portion of the fairing may be fastened to the pylon support structure 78 (Fig. 4) (e.g., about the upper end 82).

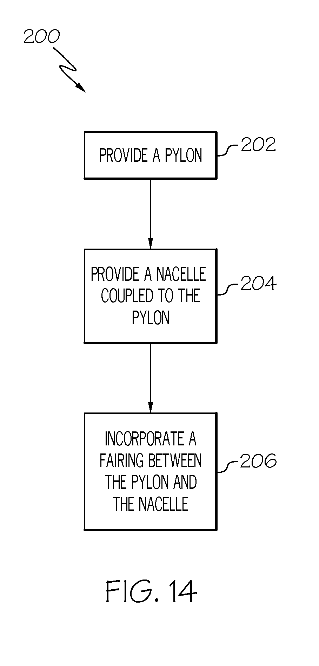

Referring to Fig. 14, one embodiment of the disclosed method, generally designated 200, for forming a surface between a nacelle and a pylon of an aircraft may begin with the step of providing a pylon, as shown at block 202. As shown at block 204, a nacelle may be provided. The nacelle may be coupled to the pylon. As shown at block 206, a fairing may be incorporated between the pylon and the nacelle.

In an example of incorporating the fairing to a newly manufactured aircraft, the incorporating step may include at least one of integrating (e.g., co-curing) a lower end of the fairing with a nacelle cowling of the nacelle and integrating the upper end of the fairing with a pylon cowling of the pylon. For example, the fairing may be co-cured with the nacelle cowling and/or the pylon cowling. In an example of incorporating the fairing to an in-service aircraft, the incorporating step may include at least one of joining (e.g., fastening or bonding) a lower end of the fairing to the nacelle cowling of the nacelle and joining the upper end of the fairing to a pylon cowling of the pylon.

Although various embodiments of the disclosed nacelle-to-pylon fairing have been shown and described, modifications may occur to those skilled in the art upon reading the specification. The present application includes such modifications and is limited only by the scope of the claims.

According to an aspect of the present disclosure there is provided a fairing formed over at least a portion of an inter-region between a nacelle and a pylon of an aircraft, said fairing comprises a longitudinal axis, a lateral axis and a transverse axis; an upper end incorporated with said pylon at a fairing-to-pylon interface; and a lower end incorporated with said nacelle at a fairing-to-nacelle interface, wherein said fairing defines a surface between said upper end and said lower end.

The fairing as disclosed wherein said fairing covers at least 25 percent of said inter-region along said longitudinal axis.

The fairing as disclosed wherein said upper end is tangent to said pylon at said fairing-to-pylon interface, and said lower end is tangent to said nacelle at said fairing-to-nacelle interface.

The fairing as disclosed wherein said fairing-to-pylon interface lies on a first reference plane parallel to said transverse axis, said fairing-to-nacelle interface lies on a second reference plane parallel to said lateral axis, said first reference plane and said second reference plane comprise an intersection, and said fairing further comprises a transverse dimension from said fairing-to-pylon interface to said intersection; a lateral dimension from said fairing-to-nacelle interface to said intersection; and a normal dimension from said fairing to said intersection.

The fairing as disclosed wherein said surface comprises a radius, said radius is defined by said transverse dimension, said lateral dimension and said normal dimension.

The fairing as disclosed wherein at least one of said radius, said normal dimension, said transverse dimension and said lateral dimension changes along said longitudinal axis of said fairing.

The fairing as disclosed wherein said transverse dimension and said lateral dimension are the same.

The fairing as disclosed wherein said transverse dimension and said lateral dimension are different.

The fairing as disclosed wherein said pylon comprises a corner, and a height from said corner to said intersection, and said transverse dimension of said fairing is at least 10 percent of said height.

The fairing as disclosed wherein said fairing further comprises a first end and a second end longitudinally opposed to said first end, and said normal dimension is no more than 25 percent of said transverse dimension at said second end.

The fairing as disclosed wherein said pylon comprises a first end and a second end longitudinally opposed to said first end, and said fairing further comprises a first end and a second end longitudinally opposed to said first end; and a pair of legs extending from said first end to said second end.

The fairing as disclosed wherein said first end of said fairing is positioned proximate said first end of said pylon, and said second end of said fairing is positioned proximate said second end of said pylon.

The fairing as disclosed wherein said first end of said fairing is spaced away from said first end of said pylon.

The fairing as disclosed wherein said second end of said fairing is spaced away from said second end of said pylon.

The fairing as disclosed wherein said pair of legs are connected about said first end of said pylon.

The fairing as disclosed wherein said pair of legs are separated by said first end of said pylon.

The fairing as disclosed wherein said nacelle comprises a first end, a second end longitudinally opposed to said first end, and a thrust reverser, and at least a portion said fairing defines a thrust reverse fairing proximate said thrust reverser.

The fairing as disclosed wherein said nacelle comprises a nacelle cowling defining a surface of said nacelle, said pylon comprises a pylon cowling defining a surface of said pylon, and at least one of said lower end of said fairing is integral to said nacelle cowling and said upper end of said fairing is integral to said pylon cowling.

The fairing as disclosed wherein said nacelle comprises a nacelle cowling defining a surface of said nacelle, said pylon comprises a pylon cowling defining a surface of said pylon, an at least one of said lower end of said fairing is connected to said nacelle cowling and said upper end of said fairing is connected to said pylon cowling.

According to an aspect of the present disclosure there is provided a method for forming a surface between a nacelle and a pylon of an aircraft, said method comprising providing a pylon comprising a first end and a second end opposed to said first end of said pylon in a longitudinal direction; providing a nacelle coupled to said pylon, said nacelle comprising a first end and a second end opposed to said first end of said nacelle in said longitudinal direction; and incorporating a fairing over at least a portion of an inter-region between said pylon and said nacelle, said fairing comprising an upper end incorporated to said pylon at a fairing-to-nacelle interface; and a lower end incorporated to said nacelle at a fairing-to-nacelle interface, wherein said fairing defines a surface between said upper end and said lower end, and wherein said surface comprises a radius, said radius is defined by a transverse dimension, a lateral dimension, and a normal dimension of said fairing.

## Claims

1. A fairing formed over at least a portion of an inter-region between a nacelle and a pylon of an aircraft, said fairing comprises:
a longitudinal axis, a lateral axis and a transverse axis;
an upper end incorporated with said pylon at a fairing-to-pylon interface; and
a lower end incorporated with said nacelle at a fairing-to-nacelle interface,
wherein said fairing defines a surface between said upper end and said lower end.

2. The fairing of any preceding claim wherein said fairing covers at least 25 percent of said inter-region along said longitudinal axis.

3. The fairing of any preceding claim wherein:
said upper end is tangent to said pylon at said fairing-to-pylon interface, and
said lower end is tangent to said nacelle at said fairing-to-nacelle interface.

4. The fairing of Claim 1 wherein:
said fairing-to-pylon interface lies on a first reference plane parallel to said transverse axis,
said fairing-to-nacelle interface lies on a second reference plane parallel to said lateral axis,
said first reference plane and said second reference plane comprise an intersection, and
said fairing further comprises:
a transverse dimension from said fairing-to-pylon interface to said intersection;
a lateral dimension from said fairing-to-nacelle interface to said intersection; and
a normal dimension from said fairing to said intersection.

5. The fairing of Claim 4 wherein said surface comprises a radius, said radius is defined by said transverse dimension, said lateral dimension and said normal dimension.

6. The fairing of Claim 5 wherein at least one of said radius, said normal dimension, said transverse dimension and said lateral dimension changes along said longitudinal axis of said fairing.

7. The fairing of Claim 4 wherein said transverse dimension and said lateral dimension are the same.

8. The fairing of Claim 4 wherein said transverse dimension and said lateral dimension are different.

9. The fairing of Claim 4 wherein:
said pylon comprises a corner, and a height from said corner to said intersection, and
said transverse dimension of said fairing is at least 10 percent of said height.

10. The fairing of Claim 4 wherein:
said fairing further comprises a first end and a second end longitudinally opposed to said first end, and
said normal dimension is no more than 25 percent of said transverse dimension at said second end.

11. The fairing of Claim 10 wherein:
said pylon comprises a first end and a second end longitudinally opposed to said first end, and
said fairing further comprises:
a first end and a second end longitudinally opposed to said first end; and
a pair of legs extending from said first end to said second end.

12. The fairing of Claim 11 wherein:
said first end of said fairing is positioned proximate said first end of said pylon, and
said second end of said fairing is positioned proximate said second end of said pylon.

13. The fairing of Claim 11 wherein said first end of said fairing is spaced away from said first end of said pylon.

14. The fairing of Claim 11 wherein said second end of said fairing is spaced away from said second end of said pylon.

15. The fairing of Claim 11 wherein said pair of legs are connected about said first end of said pylon.
